(19) Europäisches Patentamt
European Patent Office
Office européen des brevets

(11) **EP 2 133 386 B1**

(12) **EUROPEAN PATENT SPECIFICATION**

(45) Date of publication and mention
of the grant of the patent:
**07.12.2011 Bulletin 2011/49**

(51) Int Cl.:
*C08J 9/06* (2006.01)   *C08L 23/10* (2006.01)
*C08L 31/04* (2006.01)   *C08L 67/04* (2006.01)
*C08L 23/08* (2006.01)

(21) Application number: **08738790.8**

(22) Date of filing: **25.03.2008**

(86) International application number:
**PCT/JP2008/055481**

(87) International publication number:
**WO 2008/126660 (23.10.2008 Gazette 2008/43)**

(54) **POLYLACTIC ACID FOAM**

POLYMILCHSÄURESCHAUMSTOFF

MOUSSE EN ACIDE POLYLACTIQUE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **05.04.2007 JP 2007099206**

(43) Date of publication of application:
**16.12.2009 Bulletin 2009/51**

(73) Proprietor: **Toray Industries, Inc.
Tokyo 103-8666 (JP)**

(72) Inventors:
• **YOSHIOKA, Takahide
Otsu-shi
Shiga 520-8558 (JP)**

• **OHYAMA, Masahiko
Otsu-shi
Shiga 520-8558 (JP)**
• **OKA, Yoshiyuki
Otsu-shi
Shiga 520-8558 (JP)**

(74) Representative: **Webster, Jeremy Mark et al
Mewburn Ellis LLP
33 Gutter Lane
London
EC2V 8AS (GB)**

(56) References cited:
EP-A1- 0 905 175      EP-A1- 1 449 869
WO-A1-2006/103969   WO-A1-2006/123569
JP-A- 2006 328 314    JP-A- 2006 348 060
JP-A- 2006 348 060    JP-A- 2007 182 500

**Description**

[Technical field]

The invention relates to a polylactic acid foam that comprises polylactic acid, a polyolefin resin and a vinyl-carboxylate-modified polyolefin and has a high heat resistance and mechanical strength.

[Background art]

Though having high processability and handleability, plastics are generally thrown away once used because of difficulty in recycling and sanitary problems. As plastics have been used and discarded in increasingly large amounts, however, serious problems have taken place relating to their landfill disposal and incineration processing. Major problems include a shortage of landfill waste disposal sites, influence on the ecosystem of non-biodegradable plastics remaining in the environment, generation of large amounts of harmful gas from burned plastics, and influence of the large amounts of combustion heat on global warming, which all can cause loads on the environment.

The currently available biodegradability plastics are either oil-derived or plant-derived, but now greater attention is focused on the plant-derived plastics as a means of immobilizing carbon dioxide gas. The immobilization of carbon dioxide gas as referred to here is based in the idea that despite the generation of carbon dioxide gas from combustion, the gas is absorbed through photosynthesis to offset the increase in the carbon dioxide concentration. Of the plant-derived plastics, active studies are now performed particularly for development of useful polylactic acid products. When used alone, however, polylactic acid does not have sufficiently high impact resistance as compared with other biodegradable resins, and it is low in crystallization speed during molding, though having a high melting point, leading undesirably to moldings with a poor heat resistance.

Techniques that use a modified polyolefin to improve the impact resistance of polylactic acid has been proposed (for instance, see Patent documents 1 and 2). These proposed techniques, however, use an epoxy-containing polyolefin-based copolymer as said modified polyolefin, but they will require large costs because huge amounts of such material is necessary to achieve great improvement in impact resistance.

The present inventors have carried out studies on the use of biodegradable resins with a crosslinked structure in an attempt to provide material with improved heat resistance that can be used under severe molding conditions where non-crosslinked foams will not serve effectively. It was found that the use of a reactive compatibilizer in alloying polylactic acid with a polyolefin served to produce a flexible crosslinked foam with good appearance (Patent document 3). In that study, however, polyethylene was mainly used as said polyolefin for the alloying and, though compositions containing polypropylene were shown in some examples, its content seemed to be so small that it failed to achieve sufficiently high heat resistance. The compatibilizer used had the ability to react with the end groups of polylactic acid, and its effect depended largely on the concentration of the end groups of polylactic acid. The resulting resin compositions, therefore, were largely different in melt viscosity. And for instance, a foam produced from a crosslinked sheet-like composition will have a large thickness if the concentration of the end groups of polylactic acid is high while it will have a small thickness if the end group concentration is low. Thus, it will be difficult to produce foam products with stable quality.

[Patent document 1] Japanese Unexamined Patent Publication (Kokai) No. Hei 09-316310
[Patent document 2] Japanese Unexamined Patent Publication (Kokai) No. 2001-123055
[Patent document 3] International Publication WO 2006/103969 pamphlet

JP 2006-348060A discloses a thermoplastic resin foam sheet produced from a resin composition which comprises a polylactic acid and a polypropylene resin. JP 2006-328314A discloses a foam sheet produced from a three component resin composition consisting of polylactic acid, polystyrene resin and polypropylene resin.

In view of such prior art techniques, the invention is intended to provide a polylactic acid foam with high heat resistance, good mechanical characteristics beautiful appearance that is produced from polylactic acid, a polyolefin resin and a vinyl-carboxylate-modified polyolefin resin.

[Means of solving the problems]

The inventors made efforts to solve the aforementioned problem, and they achieved the present invention after finding that the aforementioned problem was able to be solved by using a composition of polylactic acid, a polyolefin resin and a vinyl-carboxylate-modified polyolefin resin mixed in a specific proportion.

To solve the aforementioned problem, the invention has adopted the following constitution:

(1) A polylactic acid foam comprising a resin composition which comprises: 100 parts by weight of a polyolefin resin containing a polypropylene resin that accounts for 50 wt% or more of the total polyolefin resin, 1 part by weight or more and 80 parts by weight or less of polylactic acid and a vinyl-carboxylate-modified polyolefin which is an ethylene-vinyl acetate copolymer having a vinyl acetate content of 15wt% or more and 50wt% or less; and 1 to 10 parts by weight of a polyfunctional monomer relative to 100 parts by weight of the resin composition comprising the polyolefin resin, polylactic acid and vinyl-carboxylate-modified polyolefin.

(2) A polylactic acid foam as specified in Paragraph (1) wherein the weight ratio between the polylactic acid and the vinyl carboxylate component of said vinyl-carboxylate-modified polyolefin meets the following equation.

$$0 < [\text{weight of polylactic acid}]/[\text{weight of vinyl carboxylate component of vinyl-carboxylate-modified polyolefin}] \leq 80$$

(3) A polylactic acid foam as specified in Paragraph (1) wherein polylactic acid is a copolymer of the D- and L-forms, with the weight ratio between the D- and L-forms, d/1 or 1/d, in the range of 100/0 to 90/10.

(4) A polylactic acid foam as specified in Paragraph (1) that is crosslinked by ionizing radiation.

[Effect of the invention]

The invention can produce polylactic acid foam with high heat resistance, good mechanical characteristics and beautiful appearance from polylactic acid, a polyolefin resin and a vinyl-carboxylate-modified polyolefin resin.

[Best mode for carrying out the invention]

The polylactic acid foam of the invention is described in detail below.
The polylactic acid to be used for the invention may be a polymer of purely D-form lactic acid or purely L-form lactic acid, or a copolymer of the D-form lactic acid and the L-form lactic acid. It also may be a stereocomplex of a polymer of purely D-form lactic acid and a polymer of purely L-form lactic acid mixed in an appropriate ratio. A copolymer resin will have a lower melting point but have an increased impact resistance. Thus, an appropriate copolymerization ratio between the D-form lactic acid and the L-form lactic acid may be used to suite the specific purpose. Commonly, the weight ratio between the D-form lactic acid and the L-form lactic acid, d/l or l/d, is preferable in the range of 100/0 to 90/10.
The polylactic acid to be used may be one synthesized with a generally known method, and the synthesize method to be used may be, for instance, direct condensation polymerization of lactic acid, or ring opening polymerization of a cyclic dimer (lactide). D- and L-form lactic acids may be produced by decomposing starch, derived mainly from corn, into glucose followed by fermentation by lactic acid bacteria, or oxidizing ethylene into lactonitrile followed by conversion into racemic d,l-lactic acid. Then the d- and 1-forms can be separated optically.
Said polylactic acid may be a copolymer containing a component other than lactic acid, rather than a polymer purely of polylactic acid. Thus, the physical properties of the polylactic acid can be controlled by, for instance, adding a polyol, glycol or multivalent carboxylic acid during the polymerization process. In the polylactic acid to be used for the invention, the components derived from lactic acid account for 50 mol% or more and 100 mol% or less of the total components derived from the monomers.
The compounds that may be added to lactic acid include polyols such as ethylene glycol, 2-methylpropanediol, 1,4-butanediol, 1,5-pentanediol, 1,6-hexanediol, 1,7-heptanediol, 1,8-octanediol, glycerin, trimethylolpropane, pentaerythritol, and 1,2,6-hexanetriol. The useful glycols include ethylene glycol, propylene glycol, 1,3-propylene glycol, diethylene glycol, and triethylene glycol.
The useful multivalent carboxylic acids include multivalent carboxylic acids and hydroxycarboxylic acids such as succinic acid, adipic acid, suberic acid, sebacic acid, dimer acid, malic acid, tartaric acid, and citric acid; esters thereof, and anhydrides such as succinic anhydride, maleic anhydride, itaconic anhydride, adipic anhydride, phthalic anhydride, trimellitic anhydride, pyromellitic anhydride, maleic anhydride-ethylene copolymer, and maleic anhydride-acrylonitrile copolymer.

There are no specific limitations on the weight average molecular weight of the polylactic acid, but it is preferably 80,000 or more, more preferably 100,000 or more, and more preferably 150,000 or more. If its weight average molecular weight is less than 80,000, the resulting foam will not have sufficient strength, and therefore it is not preferable. There are no specific upper limits to the weight average molecular weight of the polylactic acid, but it is preferably 500,000 or less because it will be difficult, and uneconomical accordingly, to produce a polylactic acid with a weight average molecular weight of more than 500,000.

In a polyolefin resin to be used for the invention, a polypropylene resin accounts for 50 wt% or more and 100 wt% or less of the total polyolefin resin. The preferable resin components other than the polypropylene resin in the polyolefin resin of the invention include high density polyethylene (HDPE), low density polyethylene (LDPE), linear low density polyethylene (LLDPE), poly-1-butene, 1,2-polybutadiene, hydrogenated material thereof, and polyisobutylene.

In a polypropylene resin to be used for the invention, propylene-based substances accounts for 90 wt% or more and 100 wt% or less of the olefin-derived components while the remaining material accounting for 0 wt% or more and 10 wt% or less comprises copolymers with other olefin components.

Thus, a polyolefin resin to be used for the invention is such that a polypropylene resin comprising 90 wt% or more and 100 wt% or less of olefin-derived substances as the propylene component accounts for 50 wt% or more and 100 wt% or less of the total polyolefin resin. The polyolefin resin may be a 100 wt% polypropylene resin or a mixture of a polypropylene resin and a non-polypropylene polyolefin resin as described above. Said polypropylene resin preferably accounts for 55 wt% or more and 90 wt% or less of the total polyolefin resin, and said polypropylene resin more preferably accounts for 65 wt% or more and 80 wt% or less of the total polyolefin resin.

The weight average molecular weight of a polyolefin resin to be used for the invention is preferably 150,000 or more and 500,000 or less for the same reason as for polylactic acid. Specifically, a polyolefin resin with a weight average molecular weight of less than 150,000 is not preferable because the resulting foam will fail to have a sufficient strength. A weight average molecular weight exceeding 500,000 is also unpreferable because it will be difficult, and uneconomical accordingly, to produce the intended material.

In view of heat resistance improvement, compatibility and feed material prices, the invention uses polylactic acid in combination with a polyolefin resin containing polypropylene resin up to 50 wt% or more. When only a polypropylene resin is used as the polyolefin resin, the resulting foam will fail to have sufficient flexibility, and therefore, it should preferably contain a non-polypropylene polyolefin resin. It is particularly preferable that said non-polypropylene polyolefin resin is a linear low density polyethylene (LLDPE) because addition of a small amount of a linear low density polyethylene serves to produce a foam with improved elongation at room temperature and cold resistance. Described later are the preferred quantity ratio between the polypropylene-containing polyolefin resin and polylactic acid and the preferred quantity of the polypropylene resin contained in the polyolefin resin.

For the invention, it is necessary to use a vinyl-carboxylate-modified polyolefin as an agent to compatibilize the polyolefin resin and polylactic acid. And the vinyl-carboxylate-modified polyolefin to be used for the invention is a polyolefin resin modified with a vinyl carboxylate and it can be produced by introducing a vinyl carboxylate in the backbone chain of the polyolefin resin through random copolymerization or block copolymerization.

The content of a vinyl-carboxylate-modified polyolefin to be used for the invention to produce a polylactic acid foam should preferably be more than 0 parts by weight and 30 parts by weight or less relative to the total polyolefin resin.

If a vinyl-carboxylate-modified polyolefin is not added, it will not possible to achieve a sufficient compatibility between polylactic acid and polyolefin resin, resulting in a foam with poor appearance. On the other hand, if the content of the vinyl-carboxylate-modified polyolefin is more than 30 parts by weight relative to the total polyolefin resin, the resulting polylactic acid foam tends to fail to have sufficient heat resistance, and therefore, such a content is unpreferable.

For production of a polylactic acid foam, the content of the vinyl-carboxylate-modified polyolefin should more preferably be 1 part by weight or more and 20 parts by weight or less relative to the total polyolefin resin and still more preferably 10 parts by weight or more and 18 parts by weight or less relative to the total polyolefin resin.

Useful vinyl carboxylates to produce a vinyl-carboxylate-modified polyolefin include vinyl formate, vinyl acetate, vinyl propionate, vinyl butyrate, vinyl caproate, vinyl caprylate, vinyl caprate, vinyl laurate, vinyl myristate, vinyl palmitate, vinyl stearate, isopropenyl acetate, 1-butenyl acetate, vinyl pivalate, 2-vinyl ethylhexanoate, vinyl cyclohexanecarboxylate, vinyl benzoate, vinyl cinnamate, vinyl monochloroacetate, divinyl adipate, vinyl methacrylate, vinyl crotonate, and sorbic acid vinyl. Of these, vinyl acetate is preferable because of its high ductility. A vinyl carboxylate may be used alone or two or more vinyl carboxylates may be used in combination as the modification agent to produce the vinyl-carboxylate-modified polyolefin. As such a vinyl-carboxylate-modified polyolefin, in the present invention an ethylene-vinyl acetate copolymer is used to produce a polylactic acid foam with high ductility for the invention.

In such a preferable ethylene-vinyl acetate copolymer used as the vinyl-carboxylate-modified polyolefin for the invention, the vinyl acetate component should be 15 wt% or more and 50 wt% or less of the ethylene-vinyl acetate copolymer to achieve a sufficient compatibility. The compatibility will not be sufficiently high if the content of the vinyl acetate component is less than 15 wt% while the crystallinity will be insufficient and handling will be difficult if the content is more than 50 wt%.

The preferable polyolefin components used in the vinyl-carboxylate-modified polyolefin for the invention include polypropylene, high density polyethylene (HDPE), low density polyethylene (LDPE), linear low density polyethylene (LLDPE), poly-1-butene, 1,2-polybutadiene, and hydrogenated material thereof, and polyisobutylene.

The weight average molecular weight of the vinyl carboxylate modified polyolefin used for the invention should preferably be 150,000 or more and 500,000 or less for the same reason as for polylactic acid.

Polylactic acid is not highly compatible with a polyolefin and therefore, foams produced from their mixture generally have poor appearance. A polyolefin modified with a glycidyl (meth)acrylate compound may be used to improve the compatibility between polylactic acid and a polyolefin. This serves to allow the carboxyl end groups in polylactic acid to react with the glycidyl groups to form a copolymerized component which acts to improve the compatibility. If a reactive compatibilizer such as a polyolefin modified with a glycidyl (meth)acrylate compound is used, however, the melt viscosity of the resulting composition will largely depend on the concentration of the end groups of polylactic acid. For the invention, therefore, it is preferable to use of a non-reactive compatibilizer such as a vinyl-carboxylate-modified polyolefin.

For the invention, polyfunctional monomers are used with the aim of forming crosslinks in the foam to improve its heat resistance. Such polyfunctional monomers are used in the range of 1 part by weight or more and 10 parts by weight or less, more preferably 2 parts by weight or more and 7 parts by weight or less, relative to the total weight of the resin composition that consists of polylactic acid, a polyolefin resin and a vinyl-carboxylate-modified polyolefin. The resin composition that consists of polylactic acid, a polyolefin resin and a vinyl-carboxylate-modified polyolefin is hereinafter referred to simply as "the resin composition of the invention." A sufficient effect will not be achieved if the content of the polyfunctional monomers added is less than 1 part by weight relative to 100 parts by weight of the resin composition of the invention, whereas a polyfunctional monomer content of more than 10 parts by weight relative to 100 parts by weight of the resin composition of the invention is also unpreferable because it may lead to bleedout or simply cause an increase in costs.

Said polyfunctional monomers may be generally known conventional ones including, for instance, acrylate or methacrylate compounds such as 1,6-hexanediol dimethacrylate, ethylene glycol diacrylate, ethylene glycol dimethacrylate, trimethylolpropane trimethacrylate, tetramethylolmethane triacrylate, 1,9-nonanediol dimethacrylate, and 1,10-decanediol dimethacrylate; allylic esters of carboxylic acid such as triallyl trimellitate, triallyl pyromellitate, and diallyl oxalate; allylic esters of cyanuric acid or isocyanuric acid such as triallyl cyanurate and triallyl isocyanurate; maleimide compounds such as N-phenylmaleimide and N,N'-m-phenylene bismaleimide; compounds with two or more triple bonds such as dipropargyl phthalate and dipropargyl maleate; and divinylbenzene. Of these, divinylbenzene, 1,6-hexanediol dimethacrylate, trimethylolpropane trimethacrylate, triallyl cyanurate, and triallyl isocyanurate are particular preferable, and the combination of divinylbenzene and triallyl isocyanurate and the combination of divinylbenzene and triallyl cyanurate are more preferable to produce foams with further increased heat resistance.

Concerning the compounding ratio between the polyolefin resin containing polypropylene resin up to 50 wt% or more and the polylactic acid used for the invention, polylactic acid should account for 1 part by weight or more and 80 parts by weight or less, preferably 5 parts by weight or more and 75 parts by weight or less, and more preferably 10 parts by weight or more and 70 parts by weight or less, relative to 100 parts by weight of said polyolefin resin. If the polylactic acid exceeds 80 parts by weight relative to 100 parts by weight of the polyolefin resin containing polypropylene resin up to 50 wt% or more, the polylactic acid will possibly act as matrix resin, leading to an extreme decrease in mechanical strength. If the polylactic acid accounts for only less than 1 part by weight relative to 100 parts by weight of the polyolefin resin containing polypropylene resin up to 50 wt% or more, the aim of using the polylactic acid, i.e., immobilization of carbon dioxide gas, will not be met sufficiently.

A polyolefin resin to be used for the invention should preferably contain a polypropylene resin up to 50 wt% or more, more preferably 50 wt% or more and 90 wt% or less, relative to 100 wt% of the polyolefin resin in order to achieve high heat resistance. If the content of the polypropylene resin in the polyolefin resin is less than 50 wt%, the resulting foam will fail to have sufficiently high heat resistance, and therefore, the content should preferably be 50 wt% or more. There are no specific limitations on the upper limit to the polyolefin resin to be used for the invention if it contains a polypropylene resin up to 50 wt% or more relative to the total weight of the polyolefin resin, but its content is preferably 90 wt% or less because a foam with a preferred flexibility will be easily produced when the polypropylene resin accounts for 90 wt% or less of the total polyolefin resin weight.

If the weight ratio between the polylactic acid and the vinyl carboxylate component of the vinyl-carboxylate-modified polyolefin used for the invention is described as [weight of polylactic acid]/[weight of vinyl carboxylate component of vinyl-carboxylate-modified polyolefin], then the value of [weight of polylactic acid]/[weight of vinyl carboxylate component of vinyl-carboxylate-modified polyolefin] is preferably more than 0 and 80 or less, more preferably more than 0 and 70 or less.

The value of [weight of polylactic acid]/[weight of vinyl carboxylate component of vinyl-carboxylate-modified polyolefin] should preferably be controlled at more than 0 and 80 or less because this serves to improve the compatibility between the polylactic acid and the polyolefin resin, leading to a polylactic acid foam with improved appearance.

The polypropylene resin to be used as a polyolefin resin component for the invention should preferably have a melt flow rate in the range of 0.5g/10 min to 10g/10 min at 230°C, more preferably 0.7g/10 min to 5g/10 min. If it exceeds 10g/10 min, the melt viscosity of the resin will be very low to cause a loss of the blowing gas, failing to produce a good foam, whereas the resin will have a difficulty in passing through the extrusion step if its melt flow rate is below 0.5g/10 min.

There are no specific requirements for the measuring method to be used to determine the melt flow rate of said polypropylene resin, but it is measured under the common conditions of a temperature of 230°C and a load of 2.16 kgf based on JIS K7210.

The processes that serve to produce a foamable resin composition to be used for the invention include dry blending of a foaming agent and the resin composition of the invention (as described above, the resin composition of the invention is defined as a resin composition comprising a polyolefin resin, polylactic acid, and a vinyl-carboxylate-modified polyolefin) fed as a starting material, followed by an extrusion step; and first producing the resin composition of the invention to be used as a starting material, followed by blending it with a foaming agent during the subsequent extrusion step. Extrusion foaming is defined as a process where volatile hydrocarbons and a physical foaming agent such as carbon dioxide and nitrogen are mixed and dispersed under a high pressure in an extruder to produce a foam under a reduced pressure at the die outlet. This process requires a cooling zone where the viscosity of the resin is increased to allow the resin to resist the gas pressure during the foaming step. To achieve this, it is important to knead the resin at a low rotation speed to avoid shear heating of the resin. In a process that uses a heat decomposition type chemical foaming agent, on the other hand, it is also necessary to knead the resin at a low rotation speed in order to depress the decomposition of the foaming agent. Thus, it is preferable that the resin composition is produced first followed by a co-directional twin-screw extruder, which serves to enhance the dispersion of the resin composition.

To produce a sheet-like crosslinked foam, crosslinking is carried out by a chemical crosslinking method in which a foamable resin composition produced by kneading an organic peroxide, crosslinked agent and foaming agent in an extruder is processed into a crosslinked resin sheet, followed by foaming, or an electron radiation crosslinking method in which a sheet-like material produced by kneading a crosslinked agent and foaming agent in an extruder is exposed to ionizing radiation to achieve foaming. When polylactic acid is used, the organic peroxide used acts to increase the radical decomposition rate and this makes the electron radiation crosslinking method preferable because in this method, sheet production and crosslinking are performed in two separate steps, allowing the sheet production step to be carried out stably.

The types of ionizing radiation that can be used for the electron radiation crosslinking method include, for instance, $\alpha$, $\beta$, $\gamma$ and electron rays. Depending on the desired degree of crosslinking and the shape and thickness of the material under irradiation, the exposure dose to ionizing radiation is commonly in the range of 1 to 200 kGy, preferably 1 to 100 kGy. If the exposure dose is less than 1 kGy, crosslinking will not progress to a sufficient degree, failing to achieve sufficient effects. If the exposure dose exceeds 200 kGy, it will be possible for the resin to decompose. Of these, electron ray is used preferably because resins of different thicknesses can be crosslinked efficiently under irradiation by controlling the electron acceleration voltage. There are no specific limitations on the number of times of the irradiation run with ionizing radiation.

For the invention, there are no specific limitations on the method to be used to expand the resin composition of the invention, and generally known methods may be used. One of the preferable methods is adding a heat-decomposition type foaming agent to the resin composition, and for this method, an organic heat-decomposition type foaming agent is used particularly preferably.

Specifically, such organic heat-decomposition type foaming agents include azodicarbonamide, benzenesulfonyl hydrazide, dinitrosopentamethylene tetramine, toluenesulfonyl hydrazide, azobisisobutyronitrile, and barium azodicarboxylate. One of these may be used alone or in combination with others. Such an organic heat-decomposition type foaming agent may be added preferably up to 1 to 50 parts by weight, more preferably 1 to 25 parts by weight, relative to the total weight of the resin composition of the invention. The foamability of the resin composition of the invention will decrease if the added amount of the organic heat-decomposition type foaming agent is too small while the resulting foam will tend to have poor strength and heat resistance if it is too large.

As described above, polyfunctional monomers may added as needed to the foam of the invention.

Furthermore, the polylactic acid foam of the invention may also contain various generally known conventional additive components to develop required characteristics in the polylactic acid foam to the extent that they will have no adverse influence on the effect of the invention. The useful additives include, for instance, antioxidant, lubricant, thermal stabilizer, pigment, flame retardant, flame retardation assistant, electrification prevention agent, nucleating agent, plasticizer, antibacterial agent, biodegradation accelerator, foaming agent degradation accelerator, photostabilizer, ultraviolet absorber, antiblocking agent, filler, deodorant, viscosity improver, foam stabilizer and metal degradation prevention agent. One of these may be used singly or two or more may be used in combination.

Described below is the production method for the polylactic acid foam of the invention.

A predetermined amount of the resin composition of the invention containing foaming agents as listed above (also containing polyfunctional monomers as needed) is melt-kneaded uniformly using a kneading apparatus such as uniaxial extruder, twin screw extruder, Banbury mixer, kneader mixer, and mixing roll at a temperature lower than the decomposition temperature of the heat-decomposition type foaming agent used to mold the mixture into a sheet.

Subsequently, the resulting sheet is exposed to a predetermined dose of ionizing radiation to produce a crosslinked resin sheet. This crosslinked resin sheet is heated up to above the decomposition temperature of the heat-decomposition type foaming agent to produce a foam product. The useful ionizing radiation rays include electron, X, β, and γ rays. The effective exposure dose is generally in the range of about 1 to 300 kGy, and the dose is adjusted depending on the intended gel fraction.

Thus, the foamable sheet of crosslinked resin is heated by using, for instance, hot air, infrared ray, metal bath, oil bath, or salt bath up to a temperature that is higher than the decomposition temperature of the heat-decomposition type foaming agent and also higher than the melting point of the component resin in the composition that has the highest melting point, typically in the range of 190 to 290˚C, to allow the decompose gas from the foaming agent to work to expand the resin to provide a polylactic acid foam.

[Examples]

The polylactic acid foam of the invention is described in more detail with reference to examples. The following polylactic acid, polyolefin resin, and vinyl-carboxylate-modified polyolefin materials were used in the examples and comparative examples. Examples 1 to 6 illustrate the invention of the accompanying claims.

< polylactic acid >

a1: Having a D-form content of 3.9%, weight average molecular weight of 180,000, and carboxyl end group concentration of 25 equivalents/ton
a2: Having a D-form content 12.5%, weight average molecular weight of 160,000, and carboxyl end group concentration of 31 equivalents/ton
a3: Having a D-form content 1.2%, weight average molecular weight of 180,000, and carboxyl end group concentration of 22 equivalents/ton

< polyolefin resin >

b1: Ethylene-propylene random copolymer with ethylene content of 4.5% and melt flow rate at 230˚C of 1.8g/10 min
b2: Ethylene-propylene block copolymer with ethylene content of 2.0% and melt flow rate at 230˚C of 0.9g/10 min
b3: Linear low density polyethylene (LLDPE) polymerized with metallocene catalyst with density of 923 kg/m$^3$ and melt flow rate at 190˚C of 1.8g/10 min
b4: Linear low density polyethylene (LLDPE) with density of 910 kg/m$^3$ and melt flow rate at 190˚C of 7.0g/10 min

< compatibilizer >

c1: Ethylene-vinyl acetate copolymer product (trade name EV45LX) supplied by DuPont-Mitsui Polychemicals Co., Ltd., with vinyl acetate content of 46 wt%, density of 980 kg/m$^3$, melt flow rate at 190˚C of 2.5g/10 min
c2: Ethylene-vinyl acetate copolymer product (trade name EV460) supplied by DuPont-Mitsui Polychemicals Co., Ltd., with vinyl acetate content of 19 wt%, density of 930 kg/m$^3$, melt flow rate at 190˚C of 2.5g/10 min
c3: Glycidyl methacrylate product (trade name Bondfast E) supplied by Sumitomo Chemical Co., Ltd., with copolymerization percentage of 12 wt%
c4: Ethylene methacrylic acid copolymer product (trade name N1525) supplied by DuPont-Mitsui Polychemicals Co., Ltd., with methacrylic acid content of 15 wt%, density of 940 kg/m$^3$, and melt flow rate at 190˚C of 25g/10 min

< carboxyl end group concentration measuring method >

A 0.8g portion of polylactic acid is dissolved in 20ml of a 1:1 mixture solvent of chloroform and methanol, and titrated with a 0.02N KOH methanol solution using a phenolphthalein solution as indicator.

< weight average molecular weight measuring method >

Measurements are made by gel permeation chromatography (GPC) as described in detail below:

The column temperature for GPC is adjusted to 135˚C, and chloroform, used as moving phase, is allows to pass through the column at a flow rate of 1.0 ml/min. A differential refractometer is used as detector. A polylactic acid specimen is dissolved in chloroform to prepare a solution with a concentration of 0.2 wt%, which is then injected in the GPC column.

The resulting elution curve was calibrated with a third-order approximation equation obtained from the standard polystyrene specimen to calculate the weight average molecular weight of the polylactic acid. The column used was TSK-Gel Super HN-H (H-0028 and 0029) with TSK Guard Column Super H-H (K-0008).

< density measuring method >

For the invention, the polymer density and foam density were determined by using an electronic hydrometer (MD-300S supplied by Alfa Mirage Co., Ltd.).

< appearance evaluation method >

For appearance evaluation, five A4 size sheets were cut out from the resulting foam and both sides were observed visually. The evaluation results were shown with "× (poor)" if bubble destruction or coarse bubbles were detected, "Δ (fair)" if an uneven cell diameter distribution was detected in a visually observed cross section of a sliced foam specimen in spite of absence of bubble destruction or coarse bubbles in either side of the sheet, and "○ (good)" if none of these defects were detected.

< room temperature tensile elongation evaluation method >

The tensile elongation was measured according to JIS K6767 (1999). At room temperature, each specimen was extended at a speed of 500 mm/min, and the percent elongation at rupture was determined. The evaluation results were shown with "○ (good)" if the elongation percentage was 100% or more, "Δ (fair)" if it was 50% or more and less than 100%, and "x (poor)" if it was less than 50%.

< high temperature tensile strength evaluation method >

The tensile elongation was measured according to JIS K6767 (1999). Each specimen was heated for 5 minutes in a hot air oven adjusted at a temperature of 120˚C, and then the specimen was stretched at a speed of 500 mm/min. The evaluation results were shown with "○ (good)" if the strength was 200 kPa or more when the elongation percentage reached 400%, "Δ (fair)" if it was 50 kPa or more and less than 200 kPa, and "× (poor)" if it was less than 50 kPa.

(Example 1)

A mixture consisting of 30 parts by weight of polylactic acid (al), 70 parts by weight of polypropylene resin (b1), 30 parts by weight of polyethylene-based resin (b3), and 15 parts by weight of vinyl-carboxylate-modified polyolefin (c1) was melt-kneaded in a co-directional twin-screw extruder with a diameter of 60 mm under the conditions of a cylinder temperature of 190˚C and a rotation speed of 200 rpm to produce a resin composition.

To 100 parts by weight of the resulting resin composition, added were 5 parts by weight of azodicarbonamide as foaming agent, 5 parts by weight of divinylbenzene as polyfunctional monomer, 0.3 parts by weight of Irganox 1010 (registered trademark) (supplied by Ciba Specialty Chemicals Corporation) as thermal stabilizer, and 0.2 parts by weight of AO-30 (supplied by Asahi Denka Kogyo K.K.), and the mixture was extruded from a twin screw extruder with a screw diameter of 60 mm. The front half of the cylinder was adjusted to a temperature of 170 to 180˚C while the rear half was adjusted to a temperature of 150 to 160˚C. The screw rotation speed was 15 rpm. Thus the material extruded through the T-die formed a long foamable sheet with a thickness of 1.2 mm.

Subsequently, this sheet was exposed to 100 kGy of ionizing radiation at an acceleration voltage of 800 kV to crosslink the resin. The resulting crosslinked resin sheet was fed continuously into vertical type hot air foaming furnace adjusted to a temperature of 240°C and processed for about 3 to 5 minutes to provide a sheet-like polylactic acid foam, which was wound up.

The resulting polylactic acid foam had good properties including smooth surfaces and uniform foam distribution.

(Examples 2 to 7, Comparative examples 1 to 5)

In Examples 2 to 7 and Comparative examples 1 to 5, polylactic acid foam was produced by carrying out the same process as in Example 1 except that the compositions given in Table 1 were used and that the exposure dose of ionizing radiation was changed.

Table 1 shows evaluation results for physical properties of the polylactic acid foam obtained.

Except that some materials produced in Example 5 had an uneven cell diameter distribution, all foam materials produced in Examples 2 to 7 had good appearance with a high tensile elongation at room temperature and a high tensile strength at high temperatures.

The foam material produced in Comparative example 1 had very poor foam appearance as a result of the absence of vinyl-carboxylate-modified polyolefin.

The foam material produced in Comparative example 2 showed a room temperature elongation percentage of 20%, indicating a poor mechanical strength.

The foam material produced in Comparative example 3 showed a room temperature elongation percentage of 200% and a tensile strength at 120°C and 400% of 50 kPa, indicating an insufficient heat resistance.

The foam material produced in Comparative example 4 had poor appearance, and a heavily uneven cell diameter distribution was found when cross sections of sliced foam materials were observed. The room temperature elongation percentage was 70%, indicating a poor mechanical strength.

The foam material produced in Comparative example 5 had a room temperature elongation percentage of 35%, indicating a poor mechanical strength.

[Table1]

Table 1

| | Resin composition | | | | | | | | | Exposure dose | Evaluation Item | | | | |
|---|---|---|---|---|---|---|---|---|---|---|---|---|---|---|---|
| | polylactic acid | | Polyolefin resin | | | | Compatibilizer | | [weight of polylactic acid]/[weight of vinyl carboxylate component of vinyl-carboxylate-modified polyolefin] | | | Appearance | Thickness (mm) | Density (kg/m3) | Elongation percentage at room at temp. | Tensile strength at high temp. |
| | | | Polypropylene resin | | Polyethylene resin | | | | | | | | | | | |
| | Type | Parts by weight | Type | Parts by weight | Type | Parts by weight | Typ e | Parts by eight | - | kGy | | | | | | |
| Example 1 | a1 | 30 | b1 | 70 | b3 | 30 | c1 | 15 | 4.3 | 100 | | ○ | 2.1 | 95 | ○ | ○ |
| Example 2 | a2 | 70 | b1 | 60 | b3 | 40 | c1 | 15 | 10.1 | 110 | | ○ | 2.3 | 90 | ○ | ○ |
| Example 3 | a3 | 50 | b1 | 70 | b4 | 30 | c1 | 15 | 7.2 | 90 | | ○ | 1.9 | 97 | ○ | ○ |
| Example 4 | a1 | 30 | b2 | 70 | b3 | 30 | c2 | 15 | 10.5 | 95 | | ○ | 2.4 | 91 | ○ | ○ |
| Example 5 | a1 | 70 | b1 | 70 | b3 | 30 | c1 | 2 | 76.1 | 100 | | Δ | 2.1 | 93 | ○ | ○ |
| Example 6 | a2 | 12 | b1 | 70 | b3 | 30 | c1 | 15 | 1.7 | 115 | | ○ | 2.2 | 89 | ○ | ○ |
| * Example 7 | a1 | 30 | b1 | 70 | b3 | 30 | c4 | 15 | 13.3 | 115 | | ○ | 2.2 | 89 | Δ | ○ |
| Comparative example 1 | a1 | 30 | b1 | 70 | b3 | 30 | - | - | - | 100 | | × | - | - | - | - |
| Comparative example 2 | a1 | 110 | b1 | 70 | b3 | 30 | c1 | 15 | 15.9 | 120 | | ○ | 2.4 | 101 | × | × |
| Comparative example 3 | a1 | 30 | b1 | 30 | b4 | 70 | c1 | 15 | 4.3 | 60 | | ○ | 2.2 | 92 | ○ | × |

| | Resin composition | | | | | | | | | Exposure dose | Evaluation Item | | | | |
|---|---|---|---|---|---|---|---|---|---|---|---|---|---|---|---|
| | polylactic acid | | Polyolefin resin | | | | Compatibilizer | | [weight of polylactic acid]/[weight of vinyl carboxylate component of vinyl-carboxylate-modified polyolefin] | | Appearance | Thickness (mm) | Density (kg/m3) | Elongation percentage at room at temp. | Tensile strength at high temp. |
| | | | Polypropylene resin | | Polyethylene resin | | | | | | | | | | |
| | Type | Parts by weight | Type | Parts by weight | Type | Parts by weight | Typ e | Parts by eight | - | kGy | | | | | |
| Comparative example 4 | a1 | 30 | b1 | 70 | b3 | 30 | c1 | 15 | 4.3 | | × | 1.8 | 90 | × | × |
| Comparative example 5 | a1 | 30 | b1 | 30 | b4 | 70 | c1 | 40 | 1.6 | 70 | ○ | 2.0 | 90 | ○ | x |
| Comparative example 6 | a1 | 30 | b1 | 70 | b3 | 30 | c3 | 5 | - | 100 | Δ | 2.7 | 90 | Δ | Δ |
| Comparative example 7 | a1 | 90 | b1 | 70 | b3 | 30 | c1 | 15 | 13.0 | 100 | ○ | 2.7 | 90 | × | × |
| * Reference Example | | | | | | | | | | | | | | | |

EP 2 133 386 B1

[Industrial applicability]

The invention can provide a process that allows a foam characterized by a reduced load on natural environment, good appearance, low cost and good mechanical characteristics to be produced from polylactic acid. The polylactic acid foam of the invention can serve for most uses where the conventional polyolefin resin foams have been applied, indicating that it has a very large industrial value.

**Claims**

1. A polylactic acid foam comprising a resin composition which comprises:

    100 parts by weight of a polyolefin resin containing a polypropylene resin that accounts for 50 wt% or more of the total polyolefin resin, 1 part by weight or more and 80 parts by weight or less of polylactic acid and a vinyl-carboxylate-modified polyolefin which is an ethylene-vinyl acetate copolymer having a vinyl acetate content of 15wt% or more and 50wt% or less; and
    polyfunctional monomer in an amount of 1 to 10 parts by weight relative to 100 parts by weight of the resin composition comprising the polyolefin resin, polylactic acid and vinyl-carboxylate-modified polyolefin.

2. A polylactic acid foam according to Claim 1 wherein the weight ratio between the polylactic acid and the vinyl carboxylate component of said vinyl-carboxylate-modified polyolefin meets the following equation:

$$0 < [\text{weight of polylactic acid}]/[\text{weight of vinyl carboxylate component of vinyl-carboxylate-modified polyolefin}] \leq 80$$

3. A polylactic acid foam according to Claim 1 or 2 wherein said polylactic acid is a copolymer of the D- and L-forms, with the weight ratio between the D- and L-forms, d/l or l/d, in the range of 100/0 to 90/10

4. A polylactic acid foam as claimed in any one of claims 1 to 3 wherein the content of vinyl-carboxylate-modified polyolefin is more than 0 parts by weight and 30 parts by weight or less relative to the total amount of polyolefin resin.

5. A polylactic acid foam as claimed in any one of Claims 1 to 4 wherein the polyfunctional monomer is selected from divinylbenzene, 1,6-hexanediol dimethacrylate, trimethylolpropane trimethacrylate, triallyl cyanurate and triallyl isocyanurate.

6. A polylactic acid foam according to any one of Claims 1to 5 that is crosslinked by ionizing radiation.

**Patentansprüche**

1. Polymilchsäureschaum, umfassend eine Harzzusammensetzung, die Folgendes umfasst:

    100 Gewichtsteile eines Polyolefinharzes, das ein Polypropylenharz enthält, das 50 Gew.-% oder mehr des gesamten Polyolefinharzes ausmacht, 1 Gewichtsteil oder mehr und 80 Gewichtsteile oder weniger Polymilchsäure sowie ein mit Vinylcarboxylat modifiziertes Polyolefin, bei dem es sich um ein Ethylen-Vinylacetat-Copolymer mit einem Vinylacetatgehalt von 15 Gew.-% oder mehr und 50 Gew.-% oder weniger handelt; und polyfunktionelles Monomer in einer Menge von 1 bis 10 Gewichtsteilen, bezogen auf 100 Gewichtsteile der Harzzusammensetzung, die das Polyolefinharz, Polymilchsäure und mit Vinylcarboxylat modifiziertes Polyolefin umfasst.

2. Polymilchsäureschaum nach Anspruch 1, worin das Gewichtsverhältnis zwischen der Polymilchsäure und der Vinylcarboxylatkomponente des mit Vinylcarboxylat modifizierten Polyolefins der nachstehenden Gleichung entspricht:

0 < [Gewicht der Polymilchsäure] / [Gewicht der Vinylcarboxylatkomponente des mit Vinylcarboxylat modifizierten Polyolefins] ≤ 80

**3.** Polymilchsäureschaum nach Anspruch 1 oder 2, worin die Polymilchsäure ein Copolymer der D- und der L-Form ist, wobei das Gewichtsverhältnis d/l oder l/d zwischen der D- und der L-Form im Bereich von 100:0 bis 90:10 liegt.

**4.** Polymilchsäureschaum nach einem der Ansprüche 1 bis 3, worin der Gehalt des mit Vinylcarboxylat modifizierten Polyolefins mehr als 0 Gewichtsteile und 30 Gewichtsteile oder weniger, bezogen auf die Gesamtmenge an Polyolefinharz, ausmacht.

**5.** Polymilchsäureschaum nach einem der Ansprüche 1 bis 4, worin das polyfunktionelle Monomer aus Divinylbenzol, 1,6-Hexandioldimethacrylat, Trimethylolpropantrimethacrylat, Triallylcyanurat und Triallylisocyanurat ausgewählt ist.

**6.** Polymilchsäureschaum nach einem der Ansprüche 1 bis 5, der durch ionisierende Strahlung vernetzt ist.

**Revendications**

**1.** Mousse en acide polylactique comprenant une composition de résine qui comprend :

100 parties en poids d'une résine de polyoléfine contenant une résine de polypropylène qui représente 50 % en poids ou plus de la résine de polyoléfine totale, 1 partie en poids ou plus et 80 parties en poids ou moins d'acide polylactique et une polyoléfine modifiée par un carboxylate de vinyle qui est un copolymère d'éthylène-acétate de vinyle ayant une teneur en acétate de vinyle de 15 % en poids ou plus et de 50 % en poids ou moins ; et un monomère polyfonctionnel en une quantité de 1 à 10 parties en poids par rapport à 100 parties en poids de la composition de résine comprenant la résine de polyoléfine, l'acide polylactique et la polyoléfine modifiée par un carboxylate de vinyle.

**2.** Mousse en acide polylactique selon la revendication 1 dans laquelle le rapport pondéral entre l'acide polylactique et le composant carboxylate de vinyle de ladite polyoléfine modifiée par un carboxylate de vinyle satisfait l'équation suivante :

0 < [poids d'acide polylactique]/[poids de composant carboxylate de vinyle de la polyoléfine modifiée par un carboxylate de vinyle] ≤ 80.

**3.** Mousse en acide polylactique selon la revendication 1 ou 2 dans laquelle ledit acide polylactique est un copolymère des formes D et L, le rapport pondéral entre les formes D et L, d/l ou l/d, étant dans la plage de 100/0 à 90/10.

**4.** Mousse en acide polylactique selon l'une quelconque des revendications 1 à 3 dans laquelle la teneur en polyoléfine modifiée par un carboxylate de vinyle est supérieure à 0 partie en poids et inférieure ou égale à 30 parties en poids par rapport à la quantité totale de résine de polyoléfine.

**5.** Mousse en acide polylactique selon l'une quelconque des revendications 1 à 4 dans laquelle le monomère polyfonctionnel est choisi parmi le divinylbenzène, le diméthacrylate de 1,6-hexanediol, le triméthacrylate de triméthylolpropane, le cyanurate de triallyle et l'isocyanurate de triallyle.

**6.** Mousse en acide polylactique selon l'une quelconque des revendications 1 à 5 qui est réticulée par un rayonnement ionisant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI09316310 B
- JP 2001123055 A
- WO 2006103969 A
- JP 2006348060 A
- JP 2006328314 A